# EUROPÄISCHE PATENTSCHRIFT

(11) **EP 0 503 151 B1**
(45) Veröffentlichungstag und Bekanntmachung des Hinweises auf die Patenterteilung: **15.05.1996**
(21) Anmeldenummer: 91121235.5
(22) Anmeldetag: 11.12.1991
(51) Int. Cl.: H04B 7/26, H04Q 7/32

(54) **Mobiltelefonanordnung**
Mobile telephone equipment
Equipement de téléphonie mobile

(30) Priorität: 13.03.1991 DE 4107998
(43) Veröffentlichungstag der Anmeldung: 16.09.1992
(73) Patentinhaber: AEG MOBILE COMMUNICATION GmbH, D-89081 Ulm (DE)
(72) Erfinder: Korte, Werner, Dipl.-Ing., W-7900 Ulm (DE); Fröhlich, Rainer, Dipl.-Phys., W-8000 München 2 (DE); Ender, Manfred, Dr.-Ing., W-7910 Neu-Ulm (DE); Schmitt, Peter, Dr.rer.nat., W-7900 Ulm (DE)
(74) Vertreter: Körner, Ekkehard, Dipl.-Ing.

(56) Entgegenhaltungen:
- WO-A-89/00370
- DE-A- 3 817 750
- DE-U- 8 703 864
- US-A- 4 972 455

## Beschreibung

Die Erfindung betrifft eine Mobiltelefonanordnung nach dem Oberbegriff des Patentanspruchs 1. DE-U-8 703 864 offenbart eine entsprechende Anordnung.

Mobiltelefonnetze haben sich in den letzten Jahren zu einem wesentlichen Teil der Telekommunikationsdienste entwickelt. Zu den derzeit bestehenden Mobiltelefonnetzen wie z. B. dem C-Netz der Deutschen Bundespost, die überwiegend national organisiert und untereinander inkompatibel sind, sollen künftig untereinander kompatible Netze, bei welchen Teilnehmer sich im Bereich aller Netze ohne Einschränkung der Kommunikationsfähigkeit frei bewegen können (roaming), hinzukommen. Im Bereich der Deutschen Bundespost werden diese Netze als sogenannte D-Netze eingeführt. Die D-Netze unterscheiden sich wesentlich von den C-Netzen und die für diese verschiedenen Netztypen eingerichteten Geräte sind untereinander wegen verschiedener Frequenzbereiche verschiedener Modulationsarten etc. nicht kompatibel.

Da die bestehenden Netze wie z. B. das C-Netz mit hohen Teilnehmerzahlen erfolgreich eingeführt sind, werden in absehbarer Zeit verschiedene Netze nebeneinander bestehen.

Aufgabe der vorliegenden Erfindung ist es, eine für an beiden Netzen interessierte Teilnehmer vorteilhafte Mobiltelefonanordnung anzugeben.

Die Erfindung ist im Patentanspruch 1 beschrieben. Die Unteransprüche enthalten vorteilhafte Ausgestaltungen und Weiterbildungen der Erfindung.

Die Erfindung macht sich zunutze, daß die für den Nutzer wichtigen Bedienungsfunktionen in den unterschiedlichen Netzen mit Anzeige- und Bedienelementen eines einzigen Bedienhandapparats realisierbar sind und für die Netzzugangsberechtigung ein Informationsträger in Form einer sogenannten chip-Karte bereits gebräuchlich und auch für die neuen Netze vorgesehen ist. Die auf einer solchen Karte gespeicherten Informationen ermöglichen in Verbindung mit einem in einer Kartenaufnahme des Handbedienapparats vorhandenen Kartenleser, der i. a. als zur bidirektionalen Datenübertragung zwischen Handbedienapparat und Benutzer-Karte vorgesehen ist, und entsprechenden Vorkenntnissen über die Kodierung der Karteninformation eine Erkennung des Netzes, zu welchem der Karteninhaber Zugang hat. Daraus wird eine Entscheidung über die Schaltstellung der Umschalteinrichtung, z. B. in Form eines Betätigungssignals für eine elektronische Schaltergruppe abgeleitet und das Sende-Empfangs-Gerät, das der durch die Karte festgelegten Netzzugangsberechtigung entspricht, mit dem Handbedienapparat verbunden.

Für den Nutzer ergeben sich dabei wesentliche Vorteile gegenüber der parallelen Bereithaltung zweier vollständiger Einheiten mit S/E-Gerät und Handbedienapparat für jedes Netz. Neben dem Fortfall der Kosten für einen zusätzlichen Handbedienapparat sind insbesondere die Platzersparnis beim Betrieb in einem Fahrzeug durch nur eine Halterung für den Handbedienapparat und die vereinfachte Bedienung, welche keine Kontrolle über die jeweils netzrichtige Zusammenschaltung von Karte, Handbedienapparat und Sende-Empfangs-Gerät erfordert, von besonderer Bedeutung. Die Nutzung der Informationen der ohnehin unverzichtbaren Karte für die Umschaltung ist für den Benutzer von besonderem Komfort.

Die Erkennung der das Netz angebundenen Karteninformation mittels eines geeigneten Dekodiereinrichtung, die vorzugsweise in an sich gebräuchlicher Art mit einem datenverarbeitenden Prozessor nebst Speichern realisiert ist, kann beispielsweise im Handbedienapparat erfolgen und als Schaltsignal zur Umschalteinrichtung übertragen werden. Dabei kann der im Handbedienapparat im Regelfall ohnehin benötigte Prozessor mitbenutzt werden. Alternativ dazu kann die Erkennung der Karteninformation auch in der Umschalteinrichtung U erfolgen, wozu die im Handbedienapparat aus der Karte ausgelesenen Daten oder durch Umsetzung, Formatierung etc. daraus abgeleitete Daten zur Umschalteinrichtung übertragen werden.

Insbesondere bei Neukonzeption eines Sende-Empfangs-Geräts zur Verwendung in einer Anordnung der genannten Art ist es vorteilhaft, die Dekodiereinrichtung in diesem Sende-Empfangs-Gerät vorzusehen und der Umschalteinrichtung eine Grundstellung der Schaltmittel zuzuweisen, die im Zustand der Anordnung ohne in die Aufnahme eingesetzte Benutzerkarte eingenommen wird. Beim Einsetzen einer Karte in die Aufnahme werden die netzrelevanten Daten zuerst zu dem in der Grundstellung angeschlossenen Sende-Empfangs-Gerät übertragen, dort decodiert und erforderlichenfalls wird ein Umschaltsignal zu der Umschalteinrichtung übertragen. Für die Übertragung des Umschaltsignals können die gebräuchlichen Zuleitungen zu dem Sende-Empfangs-Gerät mitbenutzt werden. Ein besonderer Vorteil ist darin zu sehen, daß bei der Neukonzeption beispielsweise eines Sende-Empfangs-Geräts für ein D-Netz die Netzerkennung bereits ohne nennenswerten Zusatzaufwand mitberücksichtigt werden kann und hierfür keine Änderungen in einem bereits vorhandenen Handbedienapparat vorgenommen werden müssen bzw. die Umschalteinrichtung besonders einfach ohne eigenen Prozessor aufgebaut sein kann. Dies ist insbesondere von Vorteil für den Fall, daß neben einem bereits vorhandenen Sende-Empfangs-Gerät für das C-Netz ein neues Gerät für ein D-Netz betrieben werden soll, da diese beiden Netztypen in ihren Standards so übereinstimmen, daß der Handbedienapparat des C-Netzes auch im D-Netz benutzt werden kann.

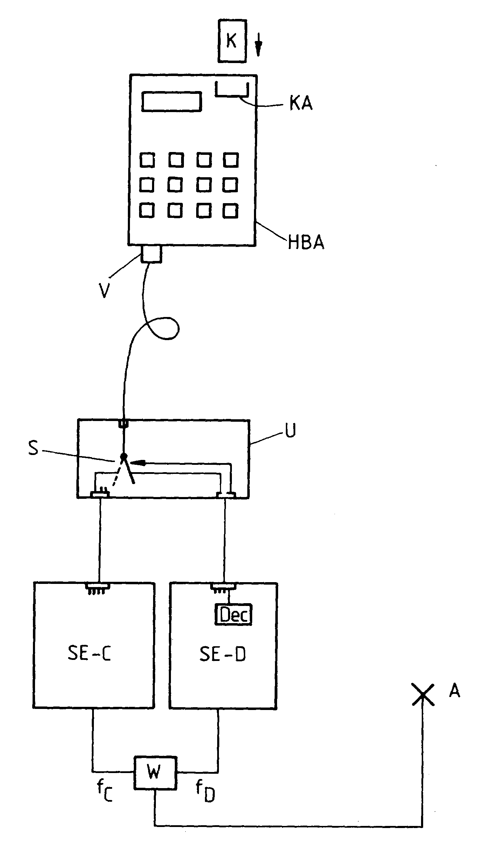

Bei nicht so weitgehend übereinstimmenden Netzstandards können im Handbedienapparat Änderungen erforderlich sein, welche durch Signalumformungen, -umsetzungen etc. eine Adaption der vom und zum Handbedienapparat übertragenen Signale durchführen. In einem solchen Fall kann es günstiger sein, bei einer Änderung des Handbedienapparates gleich die Netzerkennung aus den Karteninformationen mitzuberücksichtigen.
Die Erfindung ist nachfolgend unter Bezugnahme auf die Abbildung noch weiter veranschaulicht.

Ein an sich gebräuchlicher Handbedienapparat HBA weist eine Aufnahme KA für eine Benutzerkarte K auf. Die Benutzerkarte enthält einen Speicher mit Informationen über die durch die Karte gegebene Zugangsberechtigung zu einem Mobilfunknetz. Mittels im Handbedienapparat befindlicher Datenaustauscheinrichtungen sind Daten zwischen Handbedienapparat und Karte übertragbar. Insbesondere sind aus der Karte Daten zum Handbedienapparat auslesbar, die eine eindeutige Erkennung des Netzes, dessen Benutzung die Karte ermöglicht, erlauben.

Der Handbedienapparat ist über eine lösbare Verbindung V mit der Umschalteinrichtung verbunden. Die Umschalteinrichtung weist für jedes der bei der Anordnung vorhandenen Sende-Empfangs-(S/E)-Geräte, im skizzierten Fall z.B. ein erstes S/E-Gerät SE-C für das C-Netz der Deutschen Bundespost und ein zweites S/E-Gerät für ein D-Netz separate Verbindungsleitungen auf. Über Schaltmittel S ist alternativ eines der S/E-Geräte mit dem Handbedienapparat verbindbar. Die Schaltmittel S nehmen ohne in die Aufnahme A des Handbedienapparats HBA eingesetzte Karte K eine Grundstellung ein, in welcher das zweite S/E-Gerät SE-D mit dem Handbedienapparat verbunden ist. Im zweiten S/E-Gerät SE-D ist eine Dekodiereinrichtung Dec enthalten. Bei Einsetzen einer Karte K in die Aufnahme KA werden mittels der Datenaustauscheinrichtung Daten aus der Karte ausgelesen und zu dem zweiten S/E-Gerät SE-D übertragen, wo die Dekodiereinrichtung aus diesen Daten eine Entscheidung darüber ableitet, ob die eingesetzte Karte dem C-Netz oder D-Netz zugeordnet ist und erforderlichenfalls ein Umschaltsignal an die Umschalteinrichtung U zur Betätigung der Schaltmittel S überträgt. Das Umschaltsignal kann über eine der für andere Übertragungsfunktionen bereits vorhandenen Adern der Verbindungsleitung mitübertragen werden.

Die Antennenanschlüsse der beiden Sende-Empfangs-Geräte SE-C und SE-D sind über eine Antennenweiche W mit einer gemeinsamen Sende-Empfangs-Antenne A verbunden. Die Antennenweiche kann frequenzselektive Mittel zur Trennung der in den verschiedenen Netzen unterschiedlichen Betriebsfrequenzbereiche f_{c} bzw. f_{D} oder einen synchron zu den Schaltmitteln S von der Dekodiereinrichtung Dec betätigten Umschalter enthalten.

Die Erfindung ist nicht auf die beschriebenen Ausführungsbeispiele beschränkt. Insbesondere können mehr als zwei verschiedene und andere Netze als die angegebenen mit entsprechenden Sende-Empfangs-Geräten vorgesehen sein. Der Informationsträger kann auch in anderer Form gestaltet sein. Die verschiedenen Sende-Empfangs-Geräte können an jeweils getrennte Antennen angeschlossen sein.

## Patentansprüche

1. Mobiltelefonanordnung mit einer Sende-Empfangs-Einrichtung und einem mit dieser verbundenen Handbedienapparat (HBA), wobei der Handbedienapparat (HBA) eine Aufnahme (KA) für einen vom Handbedienapparat getrennt transportierbaren Informationsträger (K) und eine Datenaustauscheinrichtung zur Datenübertragung vom Informationsträger (K) zum Handbedienapparat (HBA) enthält, dadurch gekennzeichnet,
- daß die Sende-Empfangs-Einrichtung ein erstes Sende Empfangs-Gerät (SE-C) für ein erstes Mobilfunknetz (C) und ein zweites Sende-Empfangs-Gerät (SE-D) für ein zweites Mobilfunknetz (D) enthält,
- daß zwischen der Sende-Empfangs-Einrichtung und dem Handbedienapparat (HBA) eine Umschalteinrichtung (U) angeordnet ist, die alternativ eines der beiden Sende-Empfangs-Geräte (SE-C, SE-D) mit dem Handbedienapparat (HBA) verbindet,
- und daß eine Dekodiereinrichtung (DEC) aus von einem in die Aufnahme (K) eingesetzten Informationsträger (K) zum Handbedienapparat (HBA) übertragenen Daten oder daraus abgleiteten Daten eine Entscheidung über die Schaltstellung der Umschalteinrichtung (U) ableitet.

2. Anordnung nach Anspruch 1, dadurch gekennzeichnet, daß die Umschalteinrichtung (U) im Zustand ohne in die Aufnahme eingesetzten Informationsträger (K) eine Grundstellung einnimmt und die Dekodiereinrichtung (DEC) in dem Sende-Empfangs-Gerät vorgesehen ist, welches in der Grundstellung der Umschalteinrichtung (U) mit den Handbedienapparat (HBA) verbunden ist.

3. Anordnung nach Anspruch 1 oder 2, dadurch gekennzeichnet, daß das erste Sende-Empfangs-Gerät (SE-C) für den Betrieb im C-Netz der Deutschen Bundespost und das zweite Sende-Empfangs-Gerät (SE-D) für den Betrieb in D-Netzen eingerichtet sind.

4. Anordnung nach Anspruch 2 und 3 dadurch gekennzeichnet, daß die Dekodiereinrichtung (DEC) im Sende-Empfangs-Gerät (SE-D) für das D-Netz vorgesehen ist.

5. Anordnung nach einem der Ansprüche 1 bis 4, dadurch gekennzeichnet, daß die antennenseitigen Anschlüsse der beiden Sende-Empfangs-Geräte (SE-C, SE-D) über eine Antennenweiche (W) an eine gemeinsame Antenne (A) angeschlossen sind.

6. Anordnung nach einem der Ansprüche 1 bis 5, dadurch gekennzeichnet, daß der Handbedienapparat (HBA) lösbar mit der Umschalteinrichtung (U) verbunden ist.

7. Anordnung nach einem der Ansprüche 1 bis 6, dadurch gekennzeichnet, daß der Informationsträger (K) als Karte ausgeführt ist.

## Claims

1. Mobile telephone equipment with transmission/reception apparatus and a handset (HBA) connected to this, the handset (HBA) containing a slot (KA) for an information-carrier (K) which can be carried separately from the handset (HBA) and a data-exchange facility for the transfer of data from the information-carrier (K) to the handset (HBA), characterised
- in that the transmission/reception apparatus contains one transmitter/receiver (SE-C) for a first mobile telephone network (C) and a second transmitter/receiver (SE-D) for a second mobile telephone network (D);
- in that between the transmission/reception apparatus and the handset (HBA) there is a switch-over device (U) which connects one or the other of the transmitter/receivers (SE-C, SE-D) with the handset (HBA);
- and in that a decoding apparatus (DEC) using data transferred to the handset (HBA) from an information-carrier (K) inserted in the slot (KA) or using data obtained from it arrives at a decision on the switching position of the switch-over device (U).

2. Equipment as claimed in Claim 1, characterized in that with no information-carrier (K) inserted in the slot (KA) the switch-over device (U) takes on a basic position and the decoding device (DEC) is provided in the transmitter/receiver connected, with the switch-over device (U) in the basic position, to the handset (HBA).

3. Equipment as claimed in Claim 1 or 2, characterized in that the first transmitter/receiver (SE-C) is programmed for use in the C-network of the German Post Office and the second transmitter/receiver (SE-D) for use in the D-networks.

4. Equipment as claimed in Claims 2 and 3, characterized in that the decoding device (DEC) is provided in the transmitter/receiver (SE-D) for the D-network.

5. Equipment as claimed in Claims 1 to 4, characterized in that the connections on the antenna side of the two transmitter/receivers (SE-C, SE-D) are connected via an antenna duplexer (W) to a common antenna (A).

6. Mobile telephone equipment as claimed in Claims 1 to 5, characterized in that the handset (HBA) is removably connected to the switch-over device (U).

7. Equipment as claimed in Claims 1 to 6, characterized in that the information-carrier (K) is designed as a card.

## Revendications

1. Equipement de téléphonie mobile comprenant un dispositif émetteur-récepteur et un appareil de commande manuelle (HBA) relié à ce dispositif, l'appareil de commande manuelle (HBA) contenant un logement (KA), pour un support d'information (K) pouvant être transporté séparément vis-à-vis de l'appareil de commande manuelle, et un dispositif d'échange de données servant à transmettre des données du support d'information (K) à l'appareil de commande manuelle (HBA), caractérisé
- en ce que le dispositif émetteur-récepteur contient un premier appareil émetteur-récepteur (SE-C) pour un premier réseau de radiocommunication mobile (C) et un second appareil émetteur-récepteur (SE-D) pour un second réseau de radiocommunication mobile (D),
- en ce qu'il est prévu, disposé entre le dispositif émetteur-récepteur et l'appareil de commande manuelle (HBA), un dispositif de commutation (U) qui relie d'une manière alternée l'un des deux appareils émetteurs-récepteurs (SE-C, SE-D) à l'appareil de commande manuelle (HBA),
- et en ce qu'à partir de données transmises d'un support d'information (K) introduit dans le logement (KA) à l'appareil de commande manuelle (HBA), ou de données déduites de ces dernières, un dispositif de décodage (Dec) déduit une décision concernant la position de commutation du dispositif de commutation (U).

2. Equipement selon la revendication 1, caractérisé en ce qu'en l'état d'absence de support d'information (K) introduit dans le logement, le dispositif de commutation (U) occupe une position de base et en ce que le dispositif de décodage (Dec) est prévu dans l'appareil émetteur-récepteur qui est relié à l'appareil de commande manuelle (HBA) dans la position de base du dispositif de commutation (U).

3. Equipement selon la revendication 1 ou 2, caractérisé en ce que le premier appareil émetteur-récepteur (SE-C) est agencé pour fonctionner dans le réseau C de la Poste Fédérale Allemande et le second appareil émetteur-récepteur (SE-D) est agencé pour fonctionner dans des réseaux D.

4. Equipement selon la revendication 2 ou 3, caractérisé en ce que le dispositif de décodage (Dec) est prévu dans l'appareil émetteur-récepteur (SE-D) associé au réseau D.

5. Equipement selon l'une des revendications 1 à 4, caractérisé par ce que les bornes d'antenne des deux appareils émetteurs-récepteurs (SE-C, SE-D) sont raccordées à une antenne (A) commune par l'intermédiaire d'un duplexeur d'antenne (W).

6. Equipement selon l'une des revendications 1 à 5, caractérisé en ce que l'appareil de commande manuelle (HBA) est relié d'une manière déconnectable au dispositif de commutation (U).

7. Equipement selon l'une des revendications 1 à 6, caractérisé en ce que le support d'information (K) est réalisé sous forme de carte.
